# EUROPEAN PATENT APPLICATION

(11) **EP 4 835 984 A1**
(43) Date of publication of application: **04.11.2026**
(21) Application number: 26173792.8
(22) Date of filing: 21.04.2026
(51) Int. Cl.: H01M 4/133, H01M 4/38, H01M 4/66, H01M 4/587, H01M 4/1393

(54) **NEGATIVE ELECTRODE FOR RECHARGEABLE LITHIUM BATTERY AND RECHARGEABLE LITHIUM BATTERY INCLUDING THE NEGATIVE ELECTRODE**

(30) Priority: 30.04.2025 KR 20250057220
(71) Applicant: SAMSUNG SDI CO., LTD., Yongin-si, Gyeonggi-do 17084 (KR)
(72) Inventor: KIM, Jae Wook, 16678 Suwon-si (KR)
(74) Representative: Marks & Clerk LLP

(57) **Abstract**

A negative electrode for a rechargeable lithium battery includes a current collector and a negative electrode active material layer located on the current collector. The current collector includes a carbon nanotube film. Silicon particles and carbon particles are provided on the carbon nanotube film.

## Description

### BACKGROUND

### 1. Field of the Disclosure

The present invention relates to a negative electrode for a rechargeable lithium battery, and a rechargeable lithium battery including the negative electrode.

### 2. Discussion of Related Art

With the rapid spread of electronic devices, such as mobile phones, notebook computers, and electric vehicles, using batteries, the demand for secondary batteries having high energy density and high capacity is rapidly increasing. Thus, research and development for improving the performance of rechargeable lithium batteries has been conducted.

A rechargeable lithium battery includes a positive electrode and a negative electrode that contain an active material capable of the intercalation and deintercalation of lithium ions. A rechargeable lithium battery produces electric energy by oxidation and reduction reactions when the lithium ions are intercalated into and deintercalated from the positive electrode and the negative electrode.

### SUMMARY OF THE DISCLOSURE

The present disclosure is directed to providing a negative electrode for a rechargeable lithium battery that provides improved battery capacity and flexibility.

The present disclosure is also directed to providing a negative electrode for a rechargeable lithium battery that has a reduced expansion ratio.

One aspect of the present disclosure provides a negative electrode for a rechargeable lithium battery that includes a current collector and a negative electrode active material layer provided on the current collector, wherein the current collector includes a carbon nanotube film and silicon particles and carbon particles are provided on the carbon nanotube film.

The present disclosure is also directed to providing a rechargeable lithium battery that includes the negative electrode for a rechargeable lithium battery and a positive electrode.

At least some of the above and other features of the invention are set out in the claims.

The negative electrode for a rechargeable lithium battery according to an embodiment may have improved battery capacity and flexibility, which thereby makes the battery more useful. The negative electrode for a rechargeable lithium battery according to an embodiment may have a reduced expansion ratio, which results in a long battery life.

### BRIEF DESCRIPTION OF THE DRAWINGS

The above and other objects, features and advantages of the present disclosure will become more apparent to those of ordinary skill in the art by describing embodiments thereof in detail with reference to the accompanying drawings.
FIG. 1 is a cross-sectional view of a negative electrode for a rechargeable lithium battery according to an embodiment.
FIG. 2 is a perspective view of a negative electrode for a rechargeable lithium battery according to an embodiment.
FIGS. 3 to 6 are schematic cross-sectional views of a rechargeable lithium batteries according to embodiments.

### DETAILED DESCRIPTION OF EMBODIMENTS

Hereinafter, embodiments of the present invention will be described in detail. However, the embodiments are provided as examples, and the present disclosure is not limited to the disclosed embodiments.

Unless otherwise specified herein, when a part such as a layer, film, region, plate, etc. is described as being "on" another part, it includes not only the case where the part is "directly on" the other part but also the case where there is still another part therebetween.

Unless otherwise specified in this specification, anything indicated in the singular may also include the plural. Further, unless otherwise stated, "A or B" may mean "including A, including B, or including A and B."

As used herein, the term "a combination thereof" may mean a mixture, laminate, composite, copolymer, alloy, blend, and reaction product of the components.

Here, the term "particle diameter D50" may refer to the average particle diameter, which means the diameter of particles with a cumulative volume of 50% by volume in the particle size distribution. The particle size distribution may be measured by methods well known to those skilled in the art. For example, the particle size distribution may be measured using a particle size analyzer, a transmission electron micrograph, or a scanning electron micrograph. In another method, a D50 value may be obtained by measuring the particle diameter using a measuring device using dynamic light scattering, performing data analysis to count the number of particles for each particle size range, and then calculating the particle diameter therefrom. Alternatively, D50 may be measured using a laser diffraction method. More specifically, when measuring by laser diffraction, after the particles to be measured are dispersed in a dispersion medium, the particles may be introduced into a commercially available laser diffraction particle diameter measuring device (e.g., Microtrac MT 3000) and irradiated with ultrasonic waves of about 28 kHz at an output of 60 W, and the D50 based on 100% of the particle diameter distribution in the measurement device may be calculated.

A particle size may be measured using a particle size analyzer (Beckman Coulter; LS 13 320 XR), but the present disclosure is not limited thereto.

According to an embodiment, a negative electrode for a rechargeable lithium battery may improve battery capacity and flexibility.

### Negative electrode for rechargeable lithium battery

According to embodiments of the present disclosure the negative electrode for a rechargeable lithium battery includes a current collector and a negative electrode active material layer provided on the current collector. The current collector includes a carbon nanotube film, and wherein silicon particles and carbon particles provided on the carbon nanotube film.

The negative electrode active material layer may be provided on one or both surfaces of the current collector.

### Carbon nanotube film

In a carbon nanotube film according to the present disclosure, carbon nanotubes are entangled in the form of a network. The carbon nanotubes may entangle in the network due to a significantly greater major axis length than the minor axis length, thereby forming a film. The carbon nanotube film may be prepared by a method as described below or purchased as a commercially available product. Although not limited, the carbon nanotube film may be formed in a void-less sheet or in a fabric or felt with voids.

The carbon nanotube film may be more flexible and thinner than a conventional metal current collector. Accordingly, the carbon nanotube film may be useful for improving both the flexibility and capacity of a battery. Here, a conventional metal current collector may be a copper foil, a nickel foil, a stainless foil, a titanium foil, a nickel foam, a copper foam, and a polymer substrate coated with a conductive metal, and/or a combination thereof.

In an embodiment, the thickness of the carbon nanotube film may be 10% or less, for example, 0.1, 0.5, 1, 1.5, 2, 2.5, 3, 3.5, 4, 4.5, 5, 5.5, 6, 6.5, 7, 7.5, 8, 8.5, 9, 9.5, 10%, more than 0% and 10% or less, or 2% to 10% of the thickness of the negative electrode active material layer. In such ranges, the carbon nanotube film may be used as a current collector of the negative electrode active material layer, and, thus, the carbon nanotube film can be advantageous for improving the flexibility and capacity of the negative electrode.

The thickness of the carbon nanotube film may be 10 µm or less, for example, 1, 2, 3, 4, 5, 6, 7, 8, 9, 10 µm, more than 0 µm and 5 µm or less, or 1 µm to 10 µm. In these ranges, the carbon nanotube film may be used in a battery. The thickness of the carbon nanotube film may be adjusted by adjusting the deposition thickness of the carbon nanotubes during the preparation of the carbon nanotube film.

The carbon nanotube film comprises carbon nanotubes, and may be a porous film with voids, or may be in a form with no voids. In one or more embodiments, the carbon nanotube film may consist of carbon nanotubes, and may be a porous film with voids, or may be in a form with no voids. Specifically, the carbon nanotube film may have voids located between a plurality of carbon nanotubes and the carbon nanotubes may include voids formed in-between the carbon nanotubes. The voids may increase the flexibility of the carbon nanotube film. But the voids may also reduce the mechanical strength of the carbon nanotube film. In addition, the voids may reduce battery capacity as compared to a carbon nanotube film having the same area but no voids. In view to this aspect, the carbon nanotube film according to some embodiments of the present disclosure includes a silicon layer and a carbon layer. Accordingly, the carbon nanotube film may further improve battery capacity. Such a configuration will be described in detail below.

The carbon nanotubes in the carbon nanotube film may be one or more of single-walled carbon nanotubes and multi-walled carbon nanotubes. The carbon nanotubes may have an average major axis length of 30 µm or less, for example, more than 0 µm and 30 µm or less. The carbon nanotubes may have an average minor axis length of 30 nm or less, for example, more than 0 nm and 20 nm or less.

In some embodiments, the carbon nanotube film may be formed by chemical vapor deposition. The chemical vapor deposition may be useful for preparing a thin carbon nanotube film. The chemical vapor deposition may be according to a conventional method known to those of ordinary skill in the art.

The carbon nanotube film may be prepared by injecting a mixture of a carbon source and a catalyst into a chemical vapor deposition furnace, forming a carbon nanotube aerogel by heating the chemical vapor deposition furnace to a predetermined temperature, spinning the carbon nanotube aerogel onto a substrate, and removing the substrate.

The carbon source may be oxidized by the catalyst to provide carbon nanotubes. The carbon source may be a mixture of one or more of an alkane having 1 to 5 carbon atoms, an alkene having 2 to 5 carbon atoms, and an alkyne having 2 to 5 carbon atoms. For example, the carbon source may be one or more of methane (CH₄), ethylene (C₂H₄), and ethyne (C₂H₂), but the present disclosure is not limited to these examples.

The catalyst may oxidize the carbon source. The catalyst may be a metal catalyst. For example, the catalyst may include iron (Fe) or cobalt (Co), but the present disclosure is not limited to these examples.

The chemical vapor deposition furnace may be heated to the temperature at which the carbon nanotube aerogel is formed. For example, the furnace may be heated to 800 °C or more, for example, 800 °C to 1200 °C, but the present disclosure is not limited to heating to these temperatures.

The carbon nanotube aerogel may be spun onto the substrate using a nozzle with which the chemical vapor deposition furnace is equipped, thereby preparing the carbon nanotube film. The thickness and voids of the carbon nanotube film may be adjusted by adjusting a spinning speed, a distance between the nozzle and the substrate, and/or ambient conditions during the spinning.

The furnace for preparing the carbon nanotube films may be a vertical chemical vapor deposition furnace, and, thus, can be used for a reaction between the carbon source and the catalyst and for the spinning. That is, the carbon source and the catalyst may be added to an upper inlet of the vertical chemical vapor deposition furnace, the reaction may be performed in the furnace, and the carbon nanotube aerogel may be spun through a lower inlet, to thereby prepare the carbon nanotube film.

Because the carbon nanotube film has silicon particles and carbon particles, capacity and flexibility of battery including the carbon nanotube film is improved.

The carbon nanotube film includes both silicon particles and carbon particles.

In a carbon nanotube film only having the silicon particles, the silicon particles may excessively expand during charging and discharging of a battery, which could lead to reduced reliability of the battery. In addition, in the carbon nanotube film having only silicon particles, due to direct contact of the silicon particles with an electrolyte or the like, the volume of the silicon particles may be significantly changed and the silicon particles may be damaged by the electrolyte. As a result, the battery may have reduced capacity.

A carbon nanotube film only having the carbon particles may not completely fill voids between the carbon nanotubes, which can reduce the strength of the carbon nanotube film. Further a carbon nanotube film only having the carbon particles may not significantly improve battery capacity.

The silicon particles may be present on the surface of the carbon nanotube film. For example, in one embodiment the silicon particles may be included as a silicon layer on the surface of the carbon nanotube film. Here, "silicon layer" may refer to a continuous layer containing the silicon particles. In some embodiments, the silicon layer may cover the surface of the carbon nanotube film. The silicon layer on the surfaces of the carbon nanotubes may function as a negative electrode active material to improve battery capacity.

In another embodiment, the silicon particles may be positioned in voids between the carbon nanotubes and/or in voids in the carbon nanotubes of the carbon nanotube film, thereby increasing the mechanical strength of the carbon nanotube film.

The silicon particles may include silicon nanoparticles that do not reduce the flexibility of the carbon nanotube film. In addition, the silicon nanoparticles may easily be included in the voids in the carbon nanotubes. The silicon nanoparticles may have an average particle size (D50) of 40 nm or less, for example, 1, 2, 3, 4, 5, 6, 7, 8, 9, 10, 11, 12, 13, 14, 15, 16, 17, 19, 20, 21, 22, 23, 24, 25, 26, 27, 28, 29, 30, 31, 32, 33, 34, 35, 36, 37, 38, 39, 40 nm, more than 0 nm and 40 nm or less, or 1 nm to 40 nm. The silicon nanoparticles may have a spherical shape, but the present disclosure is not limited in this regard.

In some embodiments, the silicon particles may be formed by silane (SiH₄) gas deposition. The silane gas may be decomposed to form the silicon particles. A reaction of forming the silicon particles from the silane gas may be performed according to Scheme 1 below:

[Scheme 1] SiH₄ (g) → Si (s) + 2H₂ (g)

The reaction of forming the silicon particles from the silane gas may be performed by a conventional method known to those of ordinary skill in the art. In particular, the silicon nanoparticles may be easily prepared from the silane gas.

In an embodiment, the reaction may include chemical vapor deposition. Specifically, the silane gas may be injected into a furnace for chemical vapor deposition and decomposed at 420 °C or more, for example, 500 °C or more. The reaction may be performed in an inert atmosphere.

The carbon particles may reduce the degree of expansion during charging and discharging of a battery when the silicon particles function as a negative electrode active material.

In some embodiments, the carbon particles may be present on the silicon particles. In some embodiments, the carbon particles may be present on the silicon layer.

The carbon particles may be included as a carbon layer on the surface of the silicon layer. Here, "carbon layer" may refer to a continuous layer containing the carbon particles. For example, the carbon layer may cover the surface of the silicon layer. The carbon layer on the surface of the silicon layer may reduce the volume change of the silicon particles during charging and discharging.

In some embodiments, the carbon layer may cover the carbon nanotubes of the carbon nanotube film. Accordingly, the carbon layer may fill voids in the carbon nanotube film and thereby increase the strength of the carbon nanotube film.

The carbon particles may include amorphous carbon. The amorphous carbon may prevent volume expansion of the silicon particles and may be easily stacked on the carbon nanotubes of the carbon nanotube film. The amorphous carbon of the carbon layer may be included at 95 wt% or more, for example, 95 wt% to 100 wt%, or 100 wt%, with respect to 100 wt% of the carbon layer.

The thickness of the carbon layer may be 10 nm or less, for example, 1, 2, 3, 4, 5, 6, 7, 8, 9, 10 nm, more than 0 nm and 10 nm or less, or 1 nm to 10 nm. In these ranges, the carbon layer may be used in a battery.

The carbon particles may be formed by chemical vapor deposition. The chemical vapor deposition may uniformly form the carbon particles, preferably the carbon layer, on the carbon nanotube film or the silicon particles.

The carbon particles may be prepared by injecting a carbon source into a furnace for chemical vapor deposition, separating carbon from the carbon source by heating the chemical vapor deposition furnace to a predetermined temperature, and coating the surface of a substrate (e.g., the carbon nanotube coated with the silicon nanoparticles) with the carbon.

The carbon source may be a mixture of one or more of an alkane having 1 to 5 carbon atoms, an alkene having 2 to 5 carbon atoms, and an alkyne having 2 to 5 carbon atoms. For example, the carbon source may be one or more of methane (CH₄), ethylene (C₂H₄), and ethyne (C₂H₂), but the present disclosure is not limited to these examples.

The chemical vapor deposition furnace may be heated to the temperature at which carbon is separated from the carbon source. For example, the furnace may be heated to 800 °C or more, for example, 800 °C to 1200 °C, but the present disclosure is not limited to these temperatures.

The carbon separated from the carbon source is formed in the chemical vapor deposition furnace. The thickness of carbon layer may be adjusted by adjustment of the speed and time of supply of the carbon source and ambient conditions for the coating.

The furnace for the carbon coating is a vertical or horizontal chemical vapor deposition furnace. With such a furnace, the carbon separated from the carbon source may easily react with the substrate surface. That is, a carbon-coated substrate may be prepared by injecting the carbon source into a gas injection port of the chemical vapor deposition furnace, separating carbon in the furnace, and coating the substrate surface with the carbon.

The thickness of the current collector may be 10 µm or less, for example, 1, 2, 3, 4, 5, 6, 7, 8, 9, 10 µm, more than 0 nm and 10 µm or less, or 1 µm to 10 µm. In these ranges, the current collector may be used in a battery.

### Negative electrode active material layer

A negative electrode active material layer is provided on at least one surface of the carbon nanotube film.

The negative electrode active material layer may prevent volume expansion of the silicon particles during charging and discharging of a battery. In addition, the negative electrode active material layer may prevent a phenomenon in which the volume change becomes severe by the direct contact of the silicon particles with an electrolyte. The negative electrode active material layer may completely prevent the silicon particles from contacting the electrolyte.

The negative electrode active material layer may contain a negative electrode active material. The negative electrode active material layer may further include a conductive material and/or a binder.

The amount of the negative electrode active material may be 90 wt% to 99.5 wt% with respect to 100 wt% of the negative electrode active material layer. The amounts of the binder and the conductive material may each be 0.5 wt% to 5 wt% with respect to 100 wt% of the negative electrode active material layer.

The negative electrode active material layer may contain graphite as a negative electrode active material. When the negative electrode active material layer contains graphite as a negative electrode active material, contact between the silicon particles and the electrolyte may be prevented and the battery capacity may be increased. For example, 90 wt% or more, for example, 90 to 99 wt%, or 95 wt% to 100 wt%, of graphite may be included in the entire negative electrode active material of the negative electrode active material layer.

The graphite may include one or more of natural graphite and artificial graphite.

The graphite may have an average particle size (D50) of 20 µm or less, for example, 5 µm to 7 µm, 5 µm to 20 µm, 13 µm to 18 µm, or 15 µm to 20 µm. In these ranges, a specific surface area may not significantly increase, thereby preventing an increase in side reactions with the electrolyte and avoiding degradation of the fast-charging performance.

The average particle size (D50) of the artificial graphite may be 10 µm to 20 µm, for example, 13 µm to 18 µm, or 15 µm to 20 µm. In these ranges, a specific surface area may not significantly increase, thereby preventing an increase in side reactions with the electrolyte and avoiding degradation of the fast-charging performance.

The artificial graphite may have a maximum particle size of 30 µm to 40 µm. The shape of the artificial graphite is not limited, but may be spherical.

The artificial graphite may be one or more types including single particles, primary particles, secondary particles that are assemblies of primary particles, and tertiary particles that are assemblies of secondary particles.

In an embodiment, coating layers containing amorphous carbon may be included on the surfaces of the secondary particles that are assemblies of primary particles.

The negative electrode active material layer may further include one or more of a binder and a conductive material.

The binder may include a non-aqueous binder, an aqueous binder, a dry binder, or a combination thereof.

The non-aqueous binder may be polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acryl rubber, butyl rubber, fluorine rubber, polyethylene oxide, polyvinylpyrrolidone, polyepichlorohydrin, polyphosphazene, poly(meth)acrylonitrile, an ethylenepropylene diene copolymer, polyvinylpyridine, chlorosulfonated polyethylene, latex, a polyester resin, a (meth)acrylic resin, a phenolic resin, an epoxy resin, a polyvinylalcohol, and a combination thereof.

When an aqueous binder is used as the negative electrode binder, a cellulose-based compound that can impart viscosity may be further included. As the cellulose-based compound, a mixture of one or more of carboxymethyl cellulose, hydroxypropylmethyl cellulose, and an alkali metal salt thereof may be used. As the alkali metal, Na, K or Li may be used.

The dry binder is a fiber-forming polymer material, for example, polytetrafluoroethylene, polyvinylidene fluoride, a polyvinylidene fluoride-hexafluoropropylene copolymer, polyethyleneoxide, or a combination thereof. That is, the negative electrode may be a dry negative electrode plate.

The conductive material may be included at more than 0 wt% and 5 wt% or less in the negative electrode active material layer.

The conductive material is used to impart conductivity to an electrode, and in a battery comprising a conductive material, any electrically conductive material that does not cause an undesirable chemical change can be used as the conductive material. A specific example may be a carbon-based material such as natural graphite, artificial graphite, carbon black, acetylene black, Ketjen black, carbon fibers, carbon nanofibers, or carbon nanotubes; a metallic substance containing copper, nickel, aluminium, or silver in the form of a metal powder or metal fiber; a conductive polymer such as a polyphenylene derivative; or a mixture thereof.

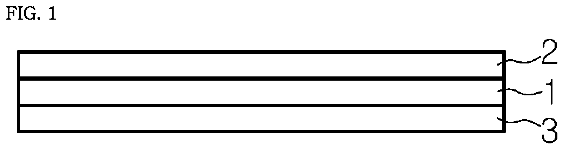

FIG. 1 is a cross-sectional view of a negative electrode for a rechargeable lithium battery according to an embodiment of the present disclosure.

Referring to FIG. 1, the negative electrode for a rechargeable lithium battery may include a carbon nanotube film 1 having silicon particles and a carbon layer, and a negative electrode active material layer 2 and/or 3 located on one or two surfaces of the carbon nanotube film 1.

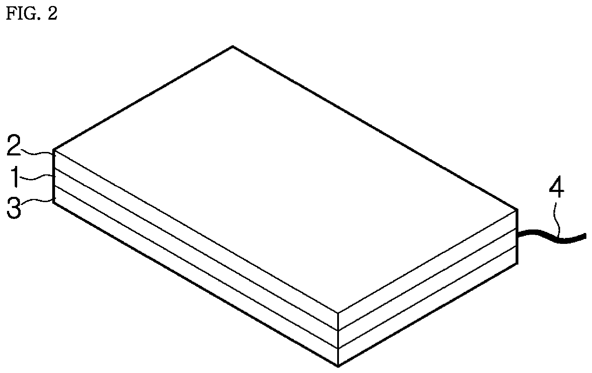

The carbon nanotube film may have an exposed carbon nanotube tab (see FIG. 2). The carbon nanotube tab may be connected to a current plate of a battery. The carbon nanotube tab may be formed to partially project from the carbon nanotube film during the preparation of the carbon nanotube film.

FIG. 2 is a perspective view of a negative electrode for a rechargeable lithium battery according to one embodiment. Referring to FIG. 2, the negative electrode for a rechargeable lithium battery may include a carbon nanotube film 1 having silicon particles and a carbon layer, and a negative electrode active material layer 2 or 3 located on one or two surfaces of the carbon nanotube film 1. The carbon nanotube film 1 may have an exposed carbon nanotube tab 4.

### Rechargeable lithium battery

According to embodiments of the present disclosure, a rechargeable lithium battery includes a positive electrode, and a negative electrode. Here, the negative electrode refers to the description described above.

### Positive electrode

A positive electrode for a rechargeable lithium battery may include a current collector and a positive electrode active material layer on the current collector. The positive electrode active material layer may include a positive electrode active material and may further include a binder and/or a conductive material. For example, the positive electrode may further include an additive that can serve as a sacrificial positive electrode.

### Positive electrode active material

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide include lithium nickel-based oxide, lithium cobalt-based oxide, lithium manganese-based oxide, lithium iron phosphate-based compound, cobalt-free nickel-manganese-based oxide, or a combination thereof.

In some examples, the following compounds represented by any one of the following Chemical Formulas may be used: LiₐA_{1-b}X_{b}O_{2-c}D_{c} (0.90 ≤ a ≤ 1.8, 0 ≤ b ≤ 0.5, and 0 ≤ c ≤ 0.05); LiₐMn_{2-b}X_{b}O_{4-c}D_{c} (0.90 ≤ a ≤ 1.8, 0 ≤ b ≤ 0.5, and 0 ≤ c ≤ 0.05); LiₐNi_{1-b-c}Co_{b}X_{c}O_{2-α}D_{α} (0.90 ≤ a ≤ 1.8, 0 ≤ b ≤ 0.5, 0≤ c≤ 0.5, and 0<α<2); LiₐNi_{1-b-c}Mn_{b}X_{c}O_{2-α}D_{α} (0.90 ≤ a ≤ 1.8, 0 ≤ b ≤ 0.5, 0 ≤ c ≤ 0.5, and 0<α<2); LiₐNi_{b}Co_{c}L¹_{d}GₑO₂ (0.90 ≤ a ≤ 1.8, 0≤b≤0.9, 0≤c≤0.5, 0≤ d≤ 0.5, and 0 ≤ e ≤ 0.1); LiₐNiG_{b}O₂ (0.90 ≤ a ≤ 1.8 and 0.001 ≤ b ≤ 0.1); LiₐCoG_{b}O₂ (0.90 ≤ a ≤ 1.8 and 0.001 ≤ b ≤ 0.1); LiₐMn_{1-b}G_{b}O₂ (0.90 ≤ a ≤ 1.8 and 0.001 ≤ b ≤ 0.1); LiₐMn₂G_{b}O₄ (0.90 ≤ a ≤ 1.8 and 0.001 ≤ b ≤ 0.1); LiₐMn_{1-g}G_{g}PO₄ (0.90 ≤ a ≤ 1.8 and 0 ≤ g ≤ 0.5); Li_{(3-f)}Fe₂(PO₄)₃ (0 ≤ f ≤ 2); or LiₐFePO₄ (0.90 ≤ a ≤ 1.8). In the these Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may be, for example, a high nickel-based positive electrode active material. Based on 100 mol% of the metal excluding lithium in the lithium transition metal composite oxide, the positive electrode active material may have a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol%. The high-nickel-based positive electrode active material may be capable of providing high capacity and can be used in a high-capacity, high-density rechargeable lithium battery.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles to each other and also to attach the positive electrode active material to the current collector. Examples of the binder include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any material that does not cause an undesirable chemical change in the rechargeable lithium battery and conducts electrons can be used in the battery. Examples of the conductive material include a carbon-based material such as natural graphite, artificial graphite, carbon black, acetylene black, ketjen black, a carbon fiber, a carbon nanofiber, and carbon nanotube; a metal-based material containing copper, nickel, aluminium, silver, etc., in a form of a metal powder or a metal fiber; a conductive polymer such as a polyphenylene derivative; or a mixture thereof.

Aluminium may be used as the current collector, but the present disclosure is not limited thereto.

### Electrolyte Solution

The rechargeable lithium battery may further include an electrolyte solution. The electrolyte solution for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN, wherein R is a C2 to C20 linear, branched, or cyclic hydrocarbon group, a double bond, an aromatic ring, or an ether bond, and the like; amides such as dimethylformamide; dioxolanes such as 1,3-dioxolane, 1,4-dioxolane, and the like; sulfolanes, and the like.

The non-aqueous organic solvents may be used alone or in combination of two or more.

When using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

Depending on the type of the rechargeable battery, a separator may be present between the positive electrode and the negative electrode.

### Separator

The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of a polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON^{®}, and polytetrafluoroethylene, or a copolymer or mixture of two or more thereof.

The organic material may include a polyvinylidene fluoride-based polymer or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃,

BaTiO₃, Mg(OH)₂, boehmite, and a combination thereof. But the present disclosure is not limited to these examples.

The organic material and the inorganic material may be mixed in one coating layer. In other embodiments, a coating layer including an organic material and a coating layer including an inorganic material may be stacked.

The rechargeable lithium battery may be cylindrical, prismatic, pouch, or coin-type batteries, and the like depending on its shape.

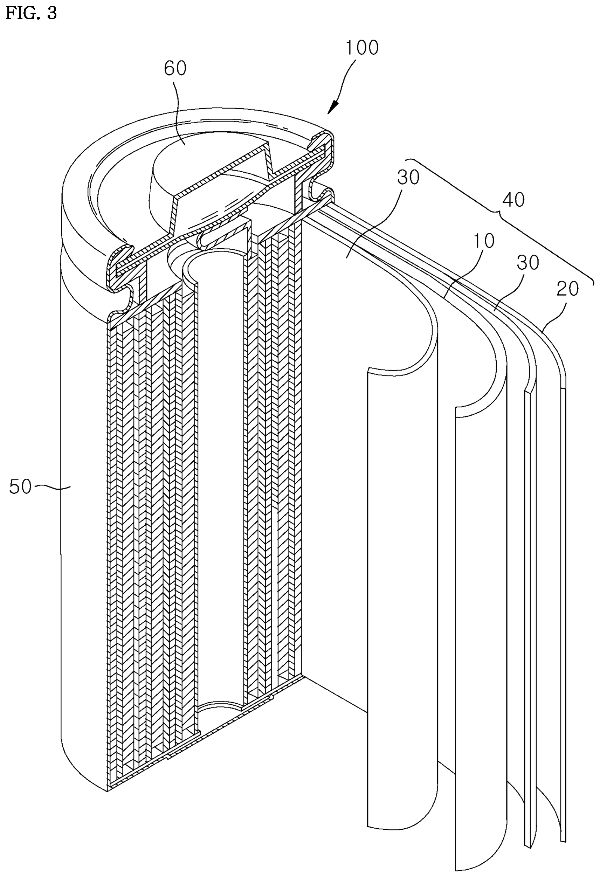

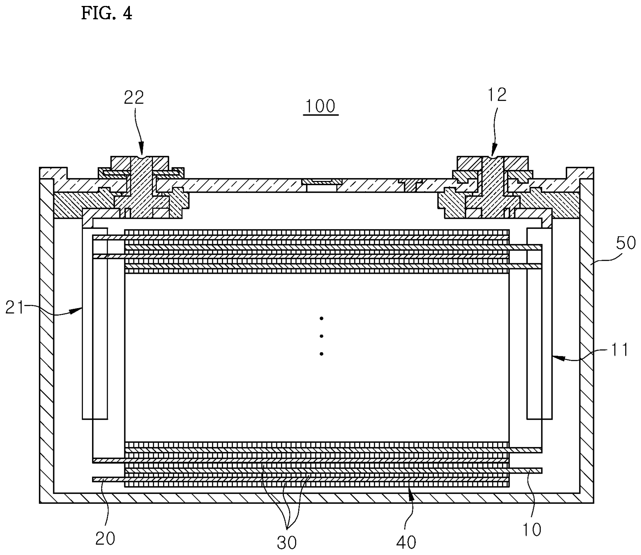

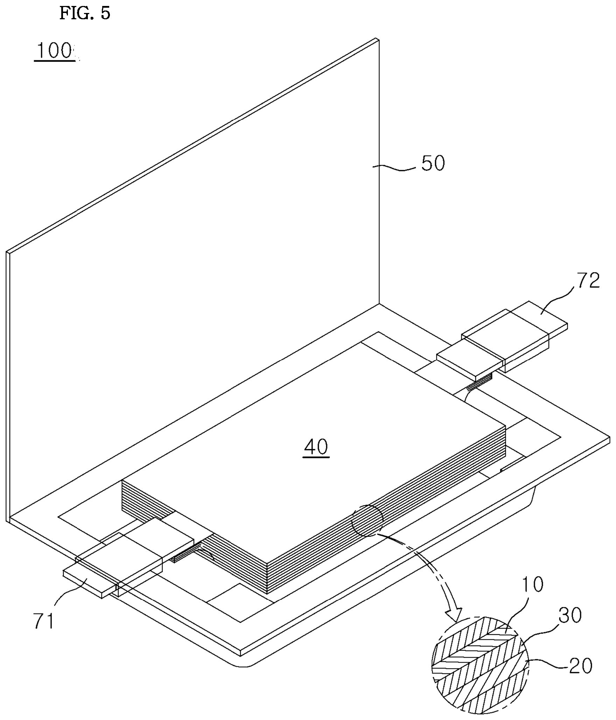

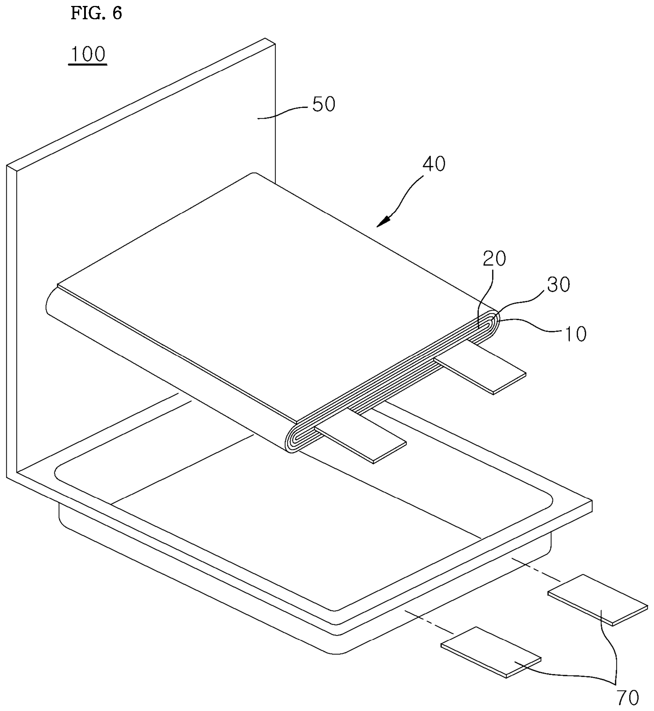

FIGS. 3 to 6 show rechargeable lithium batteries according to embodiments of the present disclosure. FIG. 3 shows a cylindrical battery, FIG. 4 shows a prismatic battery, and FIGS. 5 and 6 show pouch-type batteries. Referring to FIGS. 3 to 6, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). As shown in FIG. 3, the rechargeable lithium battery 100 may include a sealing member 60 sealing the case 50. As shown in FIG. 4, the rechargeable lithium battery 100 may include a positive lead tab 11, a positive terminal 12, a negative lead tab 21, and a negative terminal 22. As shown in FIGS. 5 and 6, the rechargeable lithium battery 100 may include an electrode tab 70, which may be, for example, a positive electrode tab 71 and a negative electrode tab 72 forming an electrical path for inducing the current formed in the electrode assembly 40 to outside of the battery 100.

The rechargeable lithium battery according to embodiments may be used in automobiles, mobile phones, and/or various types of electric devices, as non-limiting examples.

Hereinafter, an example and a comparative example of the present disclosure will be described. However, the following examples are merely provided to illustrate the present disclosure, and the present disclosure is not limited to the following examples.

### Example 1

A carbon nanotube film was prepared by preparing a carbon nanotube aerogel by injecting a mixture of CH₄ as a carbon source and a catalyst Fe into a vertically extended chemical vapor deposition furnace, heating the mixture to 800 °C to 1200 °C, and spinning the carbon nanotube aerogel through an outlet of the furnace.

The prepared carbon nanotube film was placed in a horizontally disposed chemical vapor deposition furnace, SiH₄ gas and hydrogen gas were injected, and then the furnace was heated to 500 °C to coat the carbon nanotube film with silicon nanoparticles.

A carbon nanotube film having the silicon nanoparticles and a carbon layer was prepared by putting the silicon nanoparticle-coated carbon nanotube film into the chemical vapor deposition furnace, adding CH₄ as a carbon source, separating carbon from the carbon source by heating the furnace to 800 °C to 1200 °C, and forming a carbon layer on the carbon nanotube film.

A slurry for a negative electrode active material layer was prepared by mixing 97.4 wt% of artificial graphite, 1.0 wt% of carboxymethylcellulose, 1.5 wt% of styrene-butadiene rubber, and 0.1 wt% of carbon nanotubes as a conductive material, and adding distilled water to the mixture.

A negative electrode formed of three layers, including the negative electrode active material layer, the carbon nanotube film, and the negative electrode active material layer, was prepared by coating both surfaces of the carbon nanotube film with the slurry for a negative electrode active material layer, and drying and roll-pressing the coated film.

A positive electrode slurry was prepared by mixing 97 wt% of lithium-cobalt-nickel-aluminium oxide as a positive electrode active material, 1.5 wt% of carbon nanotubes as a conductive material, and 1.5 wt% of polyvinylidenefluoride, and adding N-methyl-2-pyrrolidone. A positive electrode was prepared by applying the prepared positive electrode slurry to an aluminium foil, and then drying and roll-pressing the foil.

Three sets of positive electrode-separation film-negative electrode laminates were formed by placing a separation film between a positive electrode and a negative electrode, and then put the laminates into a pouch. 2.5 g of an electrolyte (1.5M LiPF₆-dissolved ethylene carbonate and ethylmethyl carbonate, and dimethyl carbonate (30:50:20 volume ratio)) was injected into a pouch to make a battery.

### Comparative Example 1

A slurry for a negative electrode active material layer was prepared by mixing 97.4 wt% of artificial graphite and silicone-based particles, 1.0 wt% of carboxymethylcellulose, 1.5 wt% of styrene-butadiene rubber, and 0.1 wt% of carbon nanotubes as a conductive material, and adding distilled water to the mixture.

A negative electrode of three layers, including a negative electrode active material layer, a copper layer, and a negative electrode active material layer, was prepared by applying the negative electrode active material layer slurry to both surfaces of a copper foil, and drying and roll-pressing the resulting foil. A battery was made with the prepared negative electrode in the same manner as in Example 1.

The batteries of the Example and Comparative Example were charged at 0.1 C in constant current (CC) and constant voltage (CV) modes and discharged once at 0.2 C, charged at 0.2 C in CC and CV modes and discharged once at 0.2 C, and charged at 0.33 C in CC and CV modes and discharged 500 times at 0.33 C to calculate a capacity retention and an expansion ratio for each battery. In the first charging stage, charging was performed under a CC mode with a cutoff voltage of 10 mV and a CV mode with a cutoff time of 15 hours, and discharging was performed at a cutoff voltage of 1.5 V. The subsequent process was carried out under cutoff conditions of a CC mode with a cutoff voltage of 10 mV and a CV mode with 1/10 C-rate.

The capacity retention was calculated as the ratio of discharge capacity after 500 cycles to that at the first cycle. The expansion ratio was calculated as the ratio of the cell thickness after 500 cycles to that after the first cycle.

The results are shown in Table 1.

**Table 1**

| Category | | Example 1 | Comparative Example 1 |
|---|---|---|---|
| Structure of electrode plate | Copper foil | Not used | Used |
| | Layer number | three layers | three layers |
| | Graphite/silicon ratio | 9:1 | 9:1 |
| Electrochemical properties | Capacity (mAh/g) | 500 | 350 |
| | Efficiency (%) | 92 | 91 |
| | C-rate (%) | 45 | 41 |
| | Capacity retention (%, @500, 0.33 C) | 88 | 81 |
| | Expansion ratio (%,@500) | 19 | 27 |

As shown in Table 1, as compared to Comparative Example 1, the negative electrode for a rechargeable lithium battery of Example 1 exhibited excellent charging and discharging characteristics such as energy density, efficiency, and C-rate, and improved cycle life characteristics and safety.

Although the preferred embodiments of the present disclosure have been described above, the present disclosure is not limited to the expressly disclosed embodiments.

## Claims

1. A negative electrode for a rechargeable lithium battery, the negative electrode comprising:
a current collector; and
a negative electrode active material layer provided on the current collector,
wherein the current collector includes a carbon nanotube film that includes carbon nanotubes, and
wherein silicon particles and carbon particles are provided on the carbon nanotube film.

2. The negative electrode of claim 1, wherein the silicon particles are provided on the surfaces of the carbon nanotubes in the carbon nanotube film.

3. The negative electrode of claim 2, wherein the silicon particles are provided in voids between the carbon nanotubes.

4. The negative electrode of claim 2 or claim 3, wherein the silicon particles are provided in voids in the carbon nanotubes.

5. The negative electrode of any one of claims 2 to 4, wherein the silicon particles are silicon nanoparticles.

6. The negative electrode of claim 5, wherein the silicon nanoparticles have an average particle size of 40 nm or less.

7. The negative electrode of any one of claims 1 to 6, wherein the carbon particles cover the silicon particles and the carbon nanotubes.

8. The negative electrode of any one of claims 1 to 7, wherein the carbon particles include amorphous carbon.

9. The negative electrode of any one of claims 1 to 8, wherein the carbon particles are included as a carbon layer on the surfaces of the silicon particles.

10. The negative electrode of any one of claims 1 to 9, wherein a thickness of the carbon nanotube film is 10% or less of a thickness of the negative electrode active material layer.

11. The negative electrode of any one of claims 1 to 10, wherein the negative electrode active material layer includes graphite as a negative electrode active material.

12. The negative electrode of claim 11, wherein the graphite is included at 90 wt% to 99 wt% of the negative electrode active material.

13. The negative electrode of any one of claims 1 to 12, wherein the carbon nanotube film includes an exposed carbon nanotube tab.

14. A rechargeable lithium battery comprising:
the negative electrode for a rechargeable lithium battery of any one of claims 1 to 13; and
a positive electrode.
